# DEMANDE DE BREVET EUROPEEN

(11) **EP 0 642 904 A1**
(43) Date de publication de la demande: **15.03.1995**
(21) Numéro de dépôt: 94401994.2
(22) Date de dépôt: 08.09.1994
(51) Int. Cl.: B29C 33/38, B29C 33/40, B29C 70/48

(54) **Procédé de fabrication d'outillages pour le moulage de pièces en résine de synthèse, notamment en résine bismaléimide**

(30) Priorité: 13.09.1993 FR 9310840
(71) Demandeur: R. ALKAN & Cie., 94460 Valenton (FR)
(72) Inventeur: Mattei, Jean-Pierre, F-94210 La Varenne (FR)
(74) Mandataire: Hud, Robert

(57) **Abrégé**

Le procédé comprend les opération successives qui consistent :
A - à établir un modèle froid 1, constituant une copie conforme de la pièce finale à obtenir, en un matériau facile à usiner et d'une bonne stabilité dimensionnelle à la température ambiante,
B - à réaliser un moule froid 2, récupérant l'empreinte du modèle froid 1, en un matériau stratifié de grande rigidité,
C - à obtenir un modèle chaud 4 par moulage, dans le moule froid 2, d'un matériau 3 de grande stabilité de dimensionnelle jusqu'à 250° C,
D - à obtenir un moule chaud (5) de polymérisation en matériau stratifié carbone/résine bismaléimide, à partir du modèle chaud 4.

Le moule obtenu selon l'invention permet la réalisation de pièces en résine bismaléimide et aussi de pièces en résine époxyde en augmentant considérablement dans ce dernier cas la longévité du moule.

## Description

L'invention concerne le moulage de pièces en matériaux composites et, plus particulièrement, le moulage de pièces en résine bismaléimide.

On a déjà proposé, pour la réalisation par moulage de pièces en matériaux composites, d'utiliser de la résine bismaléimide (dite résine BMI) qui permet de résister à de hautes températures. Une telle résine trouve des applications en particulier en aéronautique, par exemple pour la réalisation de réservoirs d'huile associés aux réacteurs des avions.

Une difficulté se présente toutefois au niveau de l'outillage à utiliser pour le moulage des pièces en résine BMI car l'utilisation à cet effet de moules en métal entraîne une dilatation différentielle qui est source de détérioration des moules ou des pièces et de difficulté de maîtrise des dimensions.

D'autre part, les moules réalisés avec des résines d'outillage conventionnelles (résines époxyde) n'offrent pas une tenue mécanique satisfaisante. Ces moules, dont l'usage veut que les températures n'excèdent pas 180° C, ne peuvent en effet résister aux températures de polymérisation de la résine BMI (200 à 250° C).

En partant du principe selon lequel un outillage et sa pièce réalisés avec des matériaux de même nature permettent de s'affranchir de tels problèmes de dilatation différentielle et de tenue en température l'invention propose, pour le moulage de pièces en résine bismaléimide dite BMI, de réaliser un moule qui soit lui-même en résine BMI.

Selon l'invention, le procédé de réalisation d'un moule en résine BMI comprend les opérations suivantes qui consistent :
- à réaliser un modèle froid, constituant une copie conforme de la pièce à réaliser (aux éléments d'outillage près), en un matériau se caractérisant par une bonne aptitude à l'usinage et une bonne stabilité dimensionnelle à la température ambiante (par exemple une résine époxyde chargée ou une planche usinable),
- à établir un moule froid constitué par une coquille stratifiée récupérant l'empreinte dudit modèle froid, le matériau stratifié présentant une grande rigidité, par exemple un stratifié verre-carbone/résine époxyde,
- à obtenir un modèle chaud par moulage, dans ledit moule froid, d'un matériau présentant une excellente stabilité dimensionnelle jusqu'à 250°C au moins (géopolymère assimilable à un béton), et
- à réaliser enfin, à partir dudit modèle chaud, un moule de polymérisation, dit moule chaud, en matériau stratifié carbone/résine BMI.

La qualité et la précision d'usinage du modèle froid sont d'une grande importance, car elles influent directement sur la pièce type obtenue à partir du moule chaud. L'état de surface du modèle froid doit être optimum, rendant nécessaire une opération finale de polissage.

En ce qui concerne le moule froid, il doit être d'une structure stratifiée assurant : d'une part la compatibilité au niveau matériau entre le géopolymère, la résine et les fibres et, d'autre part, une rigidité suffisante garantissant la stabilité dimensionnelle du modèle chaud malgré l'effet des contraintes dynamiques dues à l'utilisation d'un plateau vibrant lors du moulage et la masse importante du géopolymère mise en oeuvre.

L'élaboration du modèle chaud, dont la mise en forme s'effectue dans le moule froid, nécessite l'utilisation d'un procédé spécifique faisant appel à des machines de mélangeage et de vibration. Ce procédé comprend les opérations suivantes :
a) à température ambiante :
   1) préparation du moule froid par polissage puis mise en place d'un agent de démoulage,
   2) préparation du mélange constitué par un bi-composant (élément céramique + liant) et de l'eau,
   3) mélangeage sur machine rotative,
   4) coulée sur plateau vibrant pour abaisser la viscosité du mélange et homogénéiser celui-ci,
   5) démoulage
b) en température jusqu'à environ 250°C :
   6) succession d'étuvages et mise en place de bouche-pores en un polymère semi-organique compatible des résines époxydes et polyimides,
   7) stabilisation.

Le moule de polymérisation, ou moule chaud, est réalisé sur le modèle chaud par le procédé RTM (Resin Transfert Molding) : moulage par transfert de résine. A cet effet, à l'intérieur d'une enceinte à vide, le modèle chaud reçoit un revêtement céramique, destiné à être transféré en polymérisation sur le moule, et un drapage de stratifié carbone/résine BMI, puis subit l'injection d'une résine bismaléimide, avant de réaliser les cycles de polymérisation et de post-cuisson.

En variante, pour l'obtention d'une version renforcée du moule chaud, on met en place à l'intérieur de l'enceinte à vide, dans le matériau stratifié, des nervures radiales constituées d'âmes découpées en forme dans un panneau fait de fibres céramiques et de liants et préalablement imprégné de résine méthacrylate. L'adjonction de ces nervures ne perturbe pas le procédé de fabrication puisqu'après mise-en-place, ces nervures sont stratifiées avec les mêmes tissus, qu'une seule injection de résine pour tout l'outillage est nécessaire et que les cycles de polymérisation et de post-cuisson sont inchangés.

La réalisation, à l'aide du moule de polymérisation en résine BMI ainsi obtenu, de pièces en résine BMI ne nécessite pas de gamme de préparation spécifique, celle-ci est similaire à celle des outillages composites époxyde c'est-à-dire :
- mise en place d'un agent démoulant
- étuvage aux alentours de 100°C
- lustrage.

On notera que, si dans le procédé selon l'invention le nombre de phases est plus important que dans les réalisations d'outillages en composite époxyde, la possibilité de dupliquer les moules chauds à partir d'un même modèle chaud permet d'amortir le temps de réalisation des trois phases initiales.

Pour bien faire comprendre l'invention on en décrira ci-après, à titre d'exemple sans caractère limitatif, une forme d'exécution préférée en référence au dessin schématique annexé dans lequel :
la figure 1 montre schématiquement la suite des phases du procédé selon la présente invention ;
la figure 2 est une vue perspective d'un modèle froid réalisé dans le cadre de la mise-en-oeuvre du procédé selon l'invention ;
la figure 3 est une vue perspective du moule froid obtenu, selon le procédé de l'invention, à partir du modèle froid de la figure 2 ;
la figure 4 est une vue perspective du modèle chaud obtenu, selon l'invention, par utilisation du moule froid de la figure 3 ;
la figure 5 est une vue schématique en coupe verticale de la phase de réalisation du moule chaud selon l'invention, la moitié de gauche de la figure représentant l'obtention d'un moule simple et la partie de droite celle d'une moule renforcé ; et
la figure 6 est une vue schématique en coupe verticale montrant la réalisation d'une pièce en résine bismaléimide au moyen du moule de la figure 5, la moitié de gauche de la figure montrant cette opération réalisée avec un moule simple et la partie de droite avec un moule renforcé.

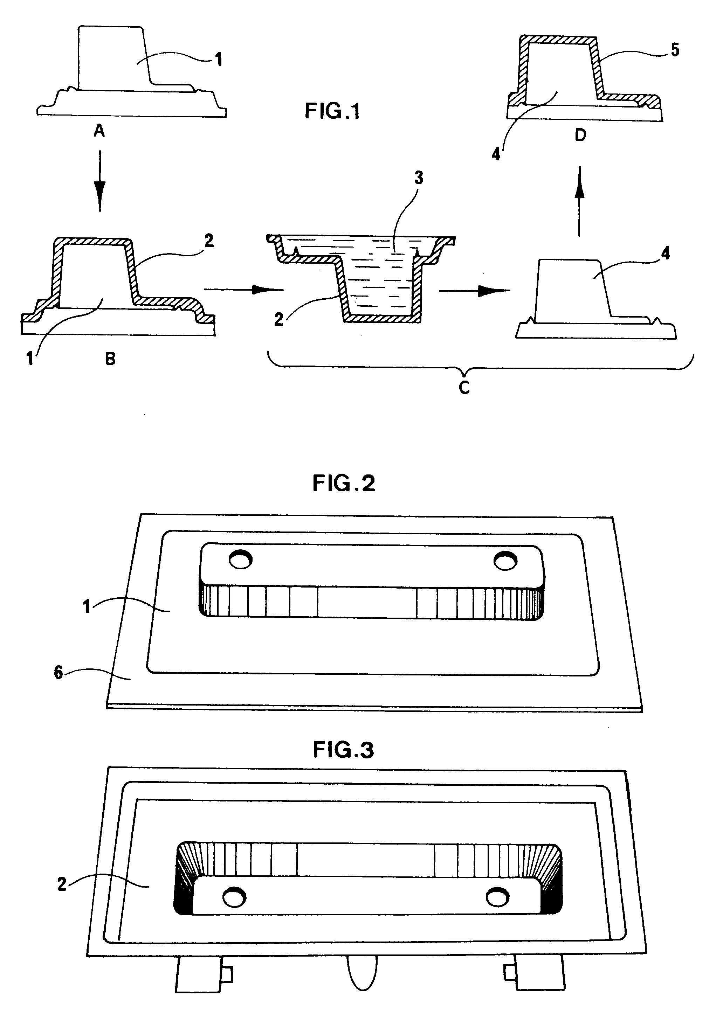

En référence d'abord à la figure 1 on a schématisé les phases successives du procédé selon l'invention qui comprennent :
- phase A : réalisation d'un modèle froid 1 constituant une copie conforme de la pièce à obtenir,
- phase B : obtention d'un moule froid 2 en un stratifié rigide, récupérant l'empreinte du modèle froid 1,
- phase C : obtention d'un modèle chaud 4, par moulage d'un géopolymère 3 dans le moule froid 2,
- phase D : obtention d'un moule de polymérisation 5 en matériau stratifié carbone/résine BMI.

Le modèle froid 1, représenté à la figure 2, est réalisé dans une planche usinable commercialisée par la société Ciba-Geigy sous la référence XB5500, en étant fixé sur un support 6 destiné à faciliter les reprises sur machine-outil. L'usinage du modèle est réalisé de façon particulièrement précise pour respecter les cotes nominales de la pièce type à réaliser, et un polissage final de ce modèle est effectué afin d'obtenir un état de surface optimum.

Le moule froid 2, représenté à la figure 3, a pour rôle de relever l'empreinte du modèle froid 1 le plus fidèlement possible afin de servir de moule à un béton céramique. On conçoit à cet effet une structure stratifiée assurant : d'une part la compatibilité matériau entre le géopolymère à mouler, la résine et les fibres et, d'autre part, une rigidité suffisante garantissant la stabilité dimensionnelle du modèle chaud malgré l'effet des contraintes dynamiques, dues à l'utilisation de plateau vibrant lors du moulage et la masse importante du géopolymère mise en oeuvre.

La mise en oeuvre de ce moule froid 2 nécessite plusieurs opérations :
- préparation du modèle froid 1 (lustrage, mise-en-place d'agent de démoulage),
- stratification en plusieurs phases d'un tissu verre sept plis Verranne 150g/m2, d'un tissu carbone 6 plis Satin 418g/m2 et d'une résine CY 219 de Ciba-Geigy avec durcisseur et accélérateur, afin de limiter la quantité de résine mise en oeuvre, minimisant ainsi l'effet d'exothermie néfaste à la rectitude du moule, et
- mise en place et stratification de raidisseurs en contreplaqué marine.

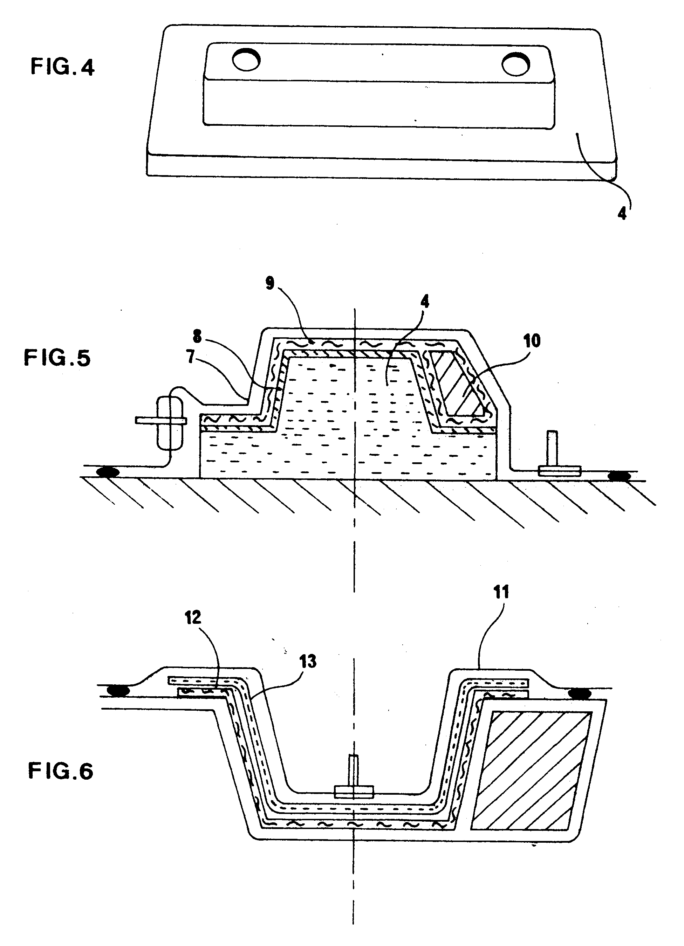

La réalisation du modèle chaud 4 (figure 4) s'effectue selon le procédé suivant :
à température ambiante :
- préparation du moule froid 2 par polissage, puis mise en place d'un agent de démoulage (connu sous le nom NETSHAPE RELEASE AGENT),
- préparation d'un mélange d'un bicomposant 3 (avec 34,5% en masse d'élément céramique et 65,5% de liant, connu sous la dénomination NETSHAPE 1000) et d'eau,
- mélangeage sur une machine rotative à 50 tours par minute,
- coulée du mélange sur plateau vibrant pour abaisser la viscosité du mélange et homogénéiser celui-ci,
- démoulage,

puis en montant en température jusqu'à 250°C :
- succession d'étuvages et mise en place de bouche-pores en un matériau dénommé NETSHAPE SEALANT 700 et constitué en un polymère semi-organique compatible des résines époxydes et polyémide, et
- stabilisation.

Ce modèle chaud 4 présente en particulier les caractéristiques suivantes :
- état de surface après préparation comparable à celui du marbre poli,
- dureté nettement supérieure au modèle froid d'origine 1,
- réparabilité possible, ce qui est important compte tenu de la fragilité du matériau et de sa sensibilité aux chocs,
- faible coefficient de dilatation après mise en oeuvre nécessitant, pour les ajustements précis et pour les inserts de taille importante, l'emploi de l'Invar.

Le moule chaud 5, c'est-à-dire le moule de polymérisation, est réalisé sur le modèle chaud 4 par le procédé dit RTM (Resin Transfert Molding). Comme on l'a représenté à la figure 5, à l'intérieur d'un sac à vide 7, on place sur le modèle chaud 4 un revêtement céramique 8 (destiné à être transféré en polymérisation sur le moule) puis en 9 douze plis de tissu Injectex (spécifique à la technnique RTM) et trois plis de tissus carbone/BMI, après quoi on injecte de la résine bismaléimide 726 (référence de Rhône-Poulenc) et on procède à la polymérisation et à la post-cuisson.

En variante, comme représenté sur la moitié de droite de la figure 5, on peut réaliser un moule chaud renforcé. Ce renforcement est obtenu par la mise en place de nervures radiales 10 constituées d'âmes découpées en forme dans une plaque d'un matériau rigide en fibres céramiques et liants organiques et minéraux, connu sous la dénomination KERLANE, préalablement imprégnée sous vide de résine méthacrylate.

L'adjonction des nervures 10 ne perturbe nullement le procédé de fabrication puisque, après leur mise en place, ces nervures sont stratifiées avec les mêmes tissus 9, puisqu'une seule injection de résine pour tout l'outillage est nécessaire, et puisque les cycles de polymérisation et de post-cuisson sont inchangés.

La réalisation de pièces en résine BMI, au moyen du moule de polymérisation 5 (renforcé ou non), ne nécessite pas de gamme de préparation spécifique et se trouve donc similaire à celle des outillages composites époxyde. En référence à la figure 6, on voit que le procédé de réalisation de telles pièces en résine BMI consiste, à l'intérieur d'un sac à vide 11 :
- à draper dans le moule de polymérisation 5, après mise en place d'un agent démoulant (par exemple celui désigné sous le nom de FREKOTE 700 NC), huit plis 12 d'un matériau préimprégné carbone/résine BMI,
- à disposer sur le matériau préimprégné 12 des produits d'environnement 13 (tissu de délaminage, tissu de drainage),
- à réaliser un étuvage à une température voisine de 100°C,
- à procéder à un lustrage.

Le procédé selon la présente invention offre les avantages des outillages composites classiques (faible masse, possibilité de duplication) avec en plus l'aptitude à mouler des structures à base de résine de classe 250°C, du type de la résine BMI, inaccessible, en continu du moins, pour les systèmes d'outillages verre ou carbone/résine époxyde du commerce.

On comprendra que la description ci-dessus a été donnée à simple titre d'exemple, sans caractère limitatif, et que des adjonctions ou des modifications constructives pourraient y être apportées sans sortir du cadre de l'invention.

Le procédé a été mis au point pour la réalisation de pièces de structures composites à base de résines du type BMI. Cependant les moules réalisés selon ce procédé peuvent être avantageusement utilisés pour la fabrication de pièces de structure en époxyde. Les températures de polymérisation de ces résines étant plus faibles, la longévité des moules utilisés pour cet usage est considérablement augmentée.

Enfin le même procédé peut-être utilisé pour la réalisation de moules en époxyde, phénolique ou autre, lorsque des caractéristiques de formes géométriques doivent être conservées.

## Revendications

1. Procédé de réalisation d'outillages pour le moulage de pièces en résine de synthèse, notamment en résine bismaléimide, caractérisé en ce qu'il comprend les opération successives consistant :
- à établir un modèle froid (1) constitué par une copie conforme de la pièce finale à obtenir et réalisé en un matériau présentant une bonne aptitude à l'usinage et une bonne stabilité dimensionnelle à la température ambiante,
- à réaliser un moule froid (2) sous la forme d'une coquille, récupérant l'empreinte dudit modèle froid (1), en un matériau stratifié d'une grande rigidité,
- à obtenir une modèle chaud (4) par moulage, dans ledit moule froid (2), d'un matériau (3) présentant une grande stabilité dimensionnelle jusqu'à 250°C minimum, et
- à obtenir un moule chaud (5) de polymérisation en matériau stratifié (9) carbone/BMI à partir dudit modèle chaud (4).

2. Procédé selon la revendication 1 caractérisé en ce que, lors de la réalisation du moule chaud (5), on intègre au matériau stratifié (9) des âmes radiales de renforcement (10) en un mélange de fibres céramiques et de liant.

3. Procédé selon la revendication 1 ou la revendication 2, caractérisé en ce que la mise en oeuvre du moule froid (2) comprend les opérations qui consistent :
- à préparer le modèle froid (1), notamment par lustrage et mise en place d'un agent de démoulage,
- à réaliser une stratification en plusieurs phases de façon à limiter la quantité de résine mise en oeuvre,
- à mettre en place des raidisseurs et à procéder à leur stratification.

4. Procédé selon l'une quelconque des revendications 1 à 3, caractérisé en ce que l'obtention du modèle chaud (4) comprend les phases successives qui comprennent :
- à température ambiante :
- une préparation du moule froid (2) comprenant notamment un polissage et la mise en place d'un agent de démoulage,
- la préparation du mélange, avec de l'eau, d'un composant fait d'un élément céramique et d'un liant,
- le mélangeage dudit mélange à l'aide d'un appareillage approprié,
- la coulée du mélange sur plateau vibrant pour abaisser la viscosité du mélange et homogénéiser celui-ci,
- le démoulage.
- en montant en température jusqu'à environ 250°C :
- une succession d'étuvages et mise en place d'un produit bouche-pores, et
- stabilisation.

5. Procédé selon l'une quelconque des revendications 1 à 5, caractérisé en ce que le moule de polymérisation dudit moule chaud (5) est réalisé sur ledit modèle chaud (4) par procédé RTM (moulage par transfert de résine).
